(19) Europäisches Patentamt
European Patent Office
Office européen des brevets

(11) EP 3 489 278 A1

# (12) EUROPÄISCHE PATENTANMELDUNG

(43) Veröffentlichungstag:
**29.05.2019 Patentblatt 2019/22**

(51) Int Cl.:
***C08G 64/02*** *(2006.01)* ***C08G 64/34*** *(2006.01)*
***C08G 65/26*** *(2006.01)*

(21) Anmeldenummer: **17203362.3**

(22) Anmeldetag: **23.11.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

## (54) HOCHMOLEKULARE POLYOXYALKYLENE MIT TIEFER GLASTEMPERATUR HERGESTELLT NACH DER GRAFTING-THROUGH-METHODE

(57) Ein Verfahren zur Herstellung von Polyoxyalkylen-Makromeren, umfassend den Schritt der Reaktion einer oder mehrerer H-funktionellen Startersubstanz(en), eines oder mehrerer Alkylenoxide und Kohlendioxid in Gegenwart eines DMC-Katalysators ist dadurch gekennzeichnet, dass mindestens eine der H-funktionellen Startersubstanz(en) eine Kohlenstoff-Kohlenstoff-Doppelbindung umfasst, wobei die Kohlenstoff-Kohlenstoff-Doppelbindung Teil einer cyclischen Struktur ist. Die erhaltenen Makromere können in einem Verfahren zur Herstellung von Polyoxyalkylen-Bürsten-Polymeren eingesetzt werden, wobei dieses Verfahren den Schritt der Reaktion mit einem Olefinmetathese-Katalysator umfasst. Die erhaltenden Polyoxyalkylen-Bürsten-Polymere können anschließend vernetzt werden.

EP 3 489 278 A1

## Beschreibung

Die vorliegende Erfindung betrifft ein Verfahren zur Herstellung von Polyoxyalkylen-Makromeren, ein Verfahren zur Herstellung von Polyoxyalkylen-Bürsten-Polymeren und ein Verfahren zur Herstellung von vernetzten Polyoxyalkylen-Polymeren sowie die gemäß diesen Verfahren erhältlichen Polymere.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist nachfolgend schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema gezeigte Polyethercarbonatpolyol beschränkt ist. Diese Reaktion ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in dem Schema gezeigte cyclische Carbonat (beispielsweise für R = $CH_3$ Propylencarbonat).

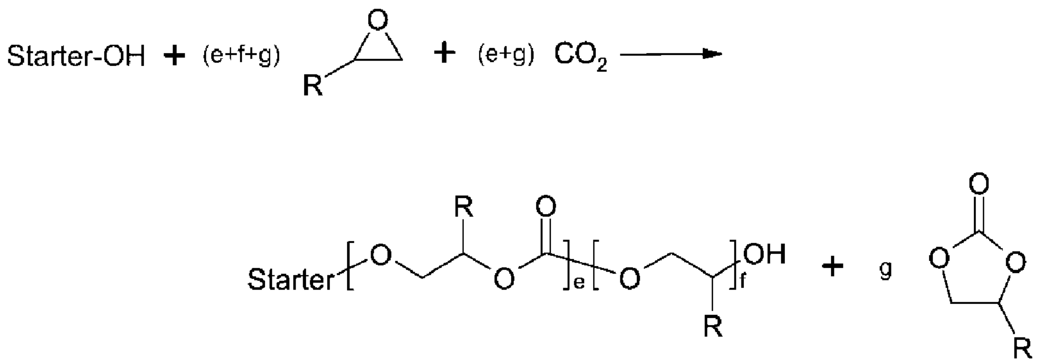

Im Zuge des Aufbaus von Graft-Copolymeren ist die Strategie des sogenannten "grafting through" von Interesse, bei der mit olefinischen Endgruppen funktionalisierte Polymere weiter funktionalisiert werden. US 5,109,075 offenbart kammförmige Graft-Copolymere von allylterminierten makromolekularen Polyether-Monomeren. Ferner beschreibt G.W. Coates in Macromol. 2012, 45, 7878-7883 die Herstellung von Polycyclohexylencarbonat-Makromeren, monoterminiert mit einer Norbornencarbonsäureester-Gruppe, die mit Hilfe einer ringöffnenden Metathesepolymerisation (ROMP) zu einem Bürsten-Polymer copolymerisiert wurden. Die Herstellung der Makromeren erfordert β-Diiminat-Zink-Komplexe, die technisch nur schlecht zugänglich sind. Ferner weisen die Makromere und das resultierende Bürstenpolymer durch Wahl der Monomere (substituierte Cyclohexenoxide) und durch die für Zink-Komplexe typische alternierende Copolymerisation eine weit über 0 °C liegende Glastemperatur auf. Durch ROMP hergestelltes Polynorbornen weist eine Glasübergangstemperatur von +35°C (siehe JP 02022354) auf. Eine hohe Glasübergangstemperatur schränkt den Einsatzbereich der erhaltenen Polymere ein. So sind die Polymere beispielsweise nicht für Elastomeranwendungen geeignet.

Polyethercarbonate, hergestellt durch Copolymerisation von Epoxiden und $CO_2$ mit DMC (Doppelmetallcyanid)-Katalysatoren, weisen, insbesondere bei Einbau von α-Olefinoxiden und/oder Glycidylethern als Comonomere (WO2015032717 (A1)), niedrige Glastemperaturen auf. Jedoch werden nur geringe Molmassen bis 10000 g/mol erzielt. Solche Polyethercarbonate sind für Elastomeranwendungen ungeeignet. Bei hochmolekularen Polyethercarbonaten ist ferner die destillative Abtrennung der als Nebenprodukt gebildeten cyclischen Alkylencarbonate erschwert.

Es bestand daher die Aufgabe, mit einem technisch leicht verfügbaren Katalysator ein niedermolekulares Polyoxyalkylen-Makromer bereitzustellen, dass leicht von Nebenprodukten wie cyclischen Alkylencarbonaten beispielsweise durch Dünnschichtdestillation befreit werden kann. Weiterhin sollte dieses Makromer anschließend zu einem hochmolekularen Polymer aufgebaut werden können.

Erfindungsgemäß gelöst wird die Aufgabe durch ein Verfahren zur Herstellung von Polyoxyalkylen-Makromeren, umfassend den Schritt der Reaktion einer oder mehrerer H-funktionellen Startersubstanzen und eines oder mehrerer Alkylenoxide in Gegenwart eines Katalysators, wobei mindestens eine der H-funktionellen Startersubstanzen eine Kohlenstoff-Kohlenstoff-Doppelbindung umfasst, welche Teil einer cyclischen Struktur ist und wobei die Startersubstanz und das Alkylenoxid während der Reaktion kontinuierlich in den Reaktor zudosiert werden.

Erfindungsgemäße Katalysatoren können Alkalimetallhydroxide, Erdalkalimetallhydroxide, primäre Amine, sekundäre Amin, tertiäre Amine, Bronsted-Säuren oder Doppelmetallcyanid-Katalysaroen ("DMC-Katalysatoren") sein.

Im Rahmen der vorliegenden Erfindung bedeutet der Begriff "Makromer" ein "makromolekulares Monomer", also ein Makromolekül, welches zur Reaktion mit weiteren Makromolekülen in der Lage ist. Im vorliegenden Fall kann dieses durch im Makromer vorliegende cyclische Doppelbindungen durch Ringöffnungs-Metathese-Polymerisation ("ROMP") erfolgen. Die erfindungsgemäß verwendeten Makromere sind bezüglich der zur ROMP befähigten Gruppe vorzugsweise monofunktionell. Es können jedoch auch höherfunktionelle Makromere oder Mischungen monofunktioneller und höherfunktioneller Makromere eingesetzt werden.

"Polyoxyalkylen-Makromere" im Sinne der vorliegenden Erfindung umfassen Polyether-Makromere, Polyethercarbonat-Makromere, Polyetherester-Makromere, Polyetherestercarbonat-Makromere.

Der DMC-Katalysator kann in fester Form oder in einem Suspensionsmittel, das keine H-funktionellen Gruppen enthält, oder einer oder mehreren H-funktionellen Startersubstanzen suspendiert zugegeben werden. Wird der DMC-Katalysator als Suspension zugegeben, wird diese bevorzugt in Schritt ($\alpha$1) dem Suspensionsmittel und/oder der einen oder mehreren H-funktionellen Startersubstanzen zugefügt.

Als Katalysator für die Herstellung der erfindungsgemäßen niedrigviskosen Polyethercarbonatpolyole mit Seitenketten wird, wie gesagt, vorzugsweise ein DMC-Katalysator (Doppel-Metall-cyanid-Katalysator) eingesetzt. Es können zusätzlich oder alternativ auch andere Katalysatoren für die Copolymerisation von Alkylenoxiden und CO2 aktiven Katalysatoren, wie beispielsweise Zink-Carboxylate oder Kobalt-Salen-Komplexe eingesetzt werden. Geeignete Zink-Carboxylate sind beispielsweise Zinksalze von Carbonsäuren, insbesondere Dicarbonsäuren, wie Adipinsäure oder Glutarsäure. Eine Übersicht über die bekannten Katalysatoren für die Copolymerisation von Alkylenoxiden und CO2 gibt zum Beispiel Chemical Communications 47(2011)141-163.

Als Katalysator für die Herstellung der erfindungsgemäßen niedrigviskosen Polyethercarbonatpolyole mit Seitenketten wird, wie gesagt, vorzugsweise ein DMC-Katalysator (Doppel-Metall-cyanid-Katalysator) eingesetzt. Es können zusätzlich oder alternativ auch andere Katalysatoren für die Copolymerisation von Alkylenoxiden und $CO_2$ aktiven Katalysatoren, wie beispielsweise Zink-Carboxylate oder Kobalt-Salen-Komplexe eingesetzt werden. Geeignete Zink-Carboxylate sind beispielsweise Zinksalze von Carbonsäuren, insbesondere Dicarbonsäuren, wie Adipinsäure oder Glutarsäure. Eine Übersicht über die bekannten Katalysatoren für die Copolymerisation von Alkylenoxiden und $CO_2$ gibt zum Beispiel Chemical Communications 47(2011)141-163.

Die in dem erfindungsgemäßen Verfahren vorzugsweise einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Doppelmetallcyanid (DMC)-Katalysatoren sind aus dem Stand der Technik zur Homopolymerisation von Alkylenoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086 A1, WO 98/16310 A1 und WO 00/47649 A1 beschrieben sind, besitzen eine sehr hohe Aktivität und ermöglichen die Herstellung von Polyethercarbonatpolyolen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. *tert*-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man

(a) im ersten Schritt eine wässrige Lösung eines Metallsalzes mit der wässrigen Lösung eines Metallcyanidsalzes in Gegenwart eines oder mehrerer organischer Komplexliganden, z.B. eines Ethers oder Alkohols, umsetzt,

(b) wobei im zweiten Schritt der Feststoff aus der aus (a) erhaltenen Suspension durch bekannte Techniken (wie Zentrifugation oder Filtration) abgetrennt wird,

(c) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(d) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (IV) auf,

$$M(X)_n \qquad (IV)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

n ist 1, wenn X = Sulfat, Carbonat oder Oxalat ist und

n ist 2, wenn X = Halogenid, Hydroxid, Carboxylat, Cyanat, Thiocyanat, Isocyanat, Isothiocyanat oder Nitrat ist,

oder geeignete Metallsalze weisen eine Zusammensetzung nach der allgemeinen Formel (V) auf,

$$M_r(X)_3 \qquad (V)$$

wobei

M ausgewählt ist aus den Metallkationen $Fe^{3+}$, $Al^{3+}$, $Co^{3+}$ und $Cr^{3+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

r ist 2, wenn X = Sulfat, Carbonat oder Oxalat ist und

r ist 1, wenn X = Halogenid, Hydroxid, Carboxylat, Cyanat, Thiocyanat, Isocyanat, Isothiocyanat oder Nitrat ist,

oder geeignete Metallsalze weisen eine Zusammensetzung nach der allgemeinen Formel (VI) auf,

$$M(X)_s \qquad (VI)$$

wobei

M ausgewählt ist aus den Metallkationen $Mo^{4+}$, $V^{4+}$ und $W^{4+}$

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

s ist 2, wenn X = Sulfat, Carbonat oder Oxalat ist und

s ist 4, wenn X = Halogenid, Hydroxid, Carboxylat, Cyanat, Thiocyanat, Isocyanat, Isothiocyanat oder Nitrat ist,

oder geeignete Metallsalze weisen eine Zusammensetzung nach der allgemeinen Formel (VII) auf,

$$M(X)_t \qquad (VII)$$

wobei

M ausgewählt ist aus den Metallkationen $Mo^{6+}$ und $W^{6+}$

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

t ist 3, wenn X = Sulfat, Carbonat oder Oxalat ist und

t ist 6, wenn X = Halogenid, Hydroxid, Carboxylat, Cyanat, Thiocyanat, Isocyanat, Isothiocyanat oder Nitrat ist.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze weisen bevorzugt eine Zusammensetzung nach der allgemeinen Formel (VIII) auf,

$$(Y)_a\ M'(CN)_b\ (A)_c \qquad (VIII)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),

A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und

a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).
Bevorzugte Doppelmetallcyanid-Verbindungen, die in den erfindungsgemäß einsetzbaren DMC-Katalysatoren enthalten sind, sind Verbindungen mit einer Zusammensetzungen nach der allgemeinen Formel (IX),

$$M_x[M'_{x'}(CN)_y]_z \qquad (IX)$$

worin M wie in Formel (IV) bis (VII) und

M' wie in Formel (IIX) definiert ist, und

x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).
Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, *n*-Butanol, *iso*-Butanol, *sek*-Butanol, *tert*-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-*tert*-butylether, Diethylenglykol-mono-*tert*-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, *tert*-Butanol 2-Methyl-3-buten-2-ol, 2-Methyl-3-butin-2-ol, Ethylenglykol-mono-*tert*-butylether und 3 -Methyl-3 -oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly (acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanocobaltat) wird in Gegenwart des organischen Komplexliganden (z.B. *tert*-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation).

Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (c-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (c-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt

im Bereich zwischen 0,5 und 5 Gew.%, bezogen auf die Gesamtmenge der Waschlösung des Schrittes (c-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von 20 - 100°C und bei Drücken von 0,1 mbar bis Normaldruck (1013 mbar) getrocknet.

Ein besonders bevorzugtes Verfahren zur Isolierung der erfindungsgemäßen DMC-Katalysatoren aus der Suspension durch Filtration, Filterkuchenwäsche und Trocknung wird zum Beispiel in der WO-A 01/80994 beschrieben.

In einer weiteren Ausgestaltung des Verfahrens zur Herstellung der Polyethercarbonatpolyole kann der DMC-Katalysator ausgewählt sein aus der Gruppe umfassend $M_x[M'_{x'}(CN)_y]_z$, wobei gilt: M = Zn(II), Fe(II), Co(II) oder Ni(II); M' = Co(III), Fe(III), Cr(III) oder Ir(III); und x = 3, x' = 1, y = 6 und z = 2. Diese DMC-Katalysatoren haben sich im Rahmen einer effektiven Prozessführung der Terpolymerisation im Sinne einer hohen Selektivität und eines hohen Umsatzes auch schon bei niedrigeren Temperaturen als besonders vorteilhaft erwiesen. Insbesondere kann auch ein DMC-Katalysator umfassend Zinkhexacyanocobaltat(III) eingesetzt werden.

Der DMC-Katalysator kann beispielsweise in einem Anteil, bezogen auf die Gesamtmasse von eingesetzter Startersubstanz und Epoxid, von ≥ 1 ppm bis ≤ 1000 ppm und vorzugsweise von ≥ 10 ppm bis ≤ 500 ppm eingesetzt werden.

Durch den Einsatz von DMC-Katalysatoren werden keine alternierenden Polycarbonate (G.W. Coates in Macromol. 2012, 45, 7878-7883, s. oben) erhalten, sondern Polyethercarbonate, in denen auch zwei oder mehr Alkylenoxide nacheinander einpolymerisiert werden, ohne dass ein $CO_2$-Einbau zwischen den Monomeren erfolgt.

In der Regel liegt in den durch das erfindungsgemäße Verfahren erhaltenen Polyoxyalkylen-Polymeren einen $CO_2$ Anteil von 3 Gew.-% bis 35 Gew.-% bevorzugt von 5 Gew.-% bis 25 Gew.-% aufweisen.

In einer bevorzugten Ausführungsform wird hierbei Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang dem Reaktor angeordnet sind, in dem Reaktor eingebracht werden. Eine Teilmenge der Alkylenoxide kann am Eingang des Reaktors eingebracht werden. Die Restmenge der Alkylenoxide wird bevorzugt über mehrere Dosierstellen, die entlang des Reaktors angeordnet sind, in den Reaktor eingebracht. Vorteilhafterweise werden Mischelemente, wie sie zum Beispiel von der Firma Ehrfeld Mikrotechnik BTS GmbH vertrieben werden, zur besseren Durchmischung der Reaktionspartner eingebaut oder Mischer-Wärmetauscherelemente, die gleichzeitig die Durchmischung und Wärmeabfuhr verbessern. Bevorzugt wird durch die Mischelemente zudosiertes $CO_2$ und/oder Alkylenoxide mit der Reaktionsmischung vermischt. In einer alternativen Ausführungsform können verschiedene Volumenelemente der Reaktionsmischung miteinander vermischt werden.

Ohne auf eine Theorie festgelegt zu sein, wird angenommen, dass durch den geringeren Grad der Regelmäßigkeit im Polyoxyalkylen-Polymer die Glasübergangstemperatur gegenüber regelmäßigen Polycarbonat-Polymeren erniedrigt ist. In der Regel liegt in den durch das erfindungsgemäße Verfahren erhaltenen Polyoxyalkylen-Polymeren ein Glasübergangstemperatur $T_g$ von ≥ -80 °C mol bis ≤ -1 °C besonders ≥ -70 °C mol bis ≤ -5 °C aufweisen.

Als Monomere für die Copolymerisation mit $CO_2$ werden vorzugsweise die folgenden Epoxide der Gruppe A eingesetzt:

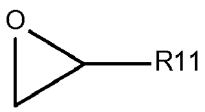

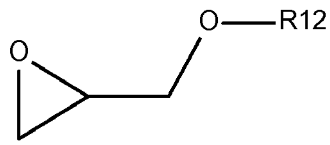

wobei R11 für Wasserstoff, einen C1-C22 Alkylrest, der durch Chlor, Brom oder Fluor substituiert sein kann oder einen Vinylrest steht und

R12 für einen C1-C22-Alkylrest, der auch Etherbrücken enthalten kann, einen C3-C12 Alkenylrest, einen C5-C12-Cycloalkylrest, der auch Etherbrücken enthalten kann, einen C6-C14 Arylrest, einen Heteroarylrest, vorzugsweise einen Furylrest, oder einen C7-C14 Aralkyl oder Alkylarylrest steht.

In einer bevorzugten Ausführungsform umfasst das Alkylenoxid eine oder mehrere Verbindung(en) die ausgewählt werden aus der Gruppe bestehend aus Propylenoxid, Ethylenoxid, 1-Butylenoxid, 1-Hexenoxid, 1-Dodecenoxid, Epichlorhydrin, Methylglycidylether, Ethylglycidylether, Butylglycidylether, Dodecylglycidylether, Tetradecylglycidylether, Methoxyethylglycidylether oder Methoxyethoxyethylglycidylether, Allylglycidylether, Phenylglycidylether, Kresylglycidylether, Furfurylglycidylether, Benzylglycidylether und Tetrahydrofurfurylglycidylether besonders bevorzugt Propylenoxid und Ethylenoxid.

Ohne an eine Theorie gebunden zu sein, resultieren die Epoxide der Gruppe A in einer niedrigen Glasübergangstemperatur des erhaltenen Copolymers.

In einer bevorzugten Ausführungsform werden als Comonomere für die Copolymerisation mit $CO_2$ weiterhin die folgenden Epoxide der Gruppe B eingesetzt: Styroloxid, Cyclohexenoxid, Vinylcyclohexenoxid, Limonenmonooxid,

Cyclopentenoxid oder Indenoxid.

Ohne an eine Theorie gebunden zu sein, resultieren die Epoxide der Gruppe B in einer Erhöhung der Glasübergangstemperatur des erhaltenen Copolymers.

In einer bevorzugten Ausführungsform liegt das Gewichtsverhältnis der eingesetzten Epoxide der Gruppe A zu den Epoxiden der Gruppe B in Bereich von 100 : 0 bis 80 : 20 Gew.-%.

Zusätzlich können Comonomere ausgewählt aus einer oder mehreren Verbindung(en) aus der Gruppe C bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden eingesetzt werden. In einer bevorzugten Ausführungsform enthalten die Comonomere der Gruppe C Doppelbindungen. Ein Beispiel für ein Comonomer der Gruppe C, das eine Doppelbindung enthält, ist Maleinsäureanhydrid eingesetzt. In einer bevorzugten Ausführungsform liegt das Gewichtsverhältnis dieser Comonomere zu der Gesamtmenge an Epoxiden im Bereich von > 0 : ≤ 100 bis ≥ 40 : ≤ 60 Gew.-%, besonders bevorzugt im Bereich von ≥ 1 : ≤ 99 bis ≥ 20 : ≤ 80 Gew.-%.

Ausführungsformen und weitere Aspekte der vorliegenden Erfindung werden nachfolgend beschrieben. Sie können beliebig miteinander kombiniert werden, sofern sich aus dem Kontext nicht eindeutig das Gegenteil ergibt.

Vorzugsweise wird die H-funktionelle Startersubstanz, welche eine Kohlenstoff-Kohlenstoff-Doppelbindung umfasst, durch die nachfolgende allgemeine Formel wiedergegeben:

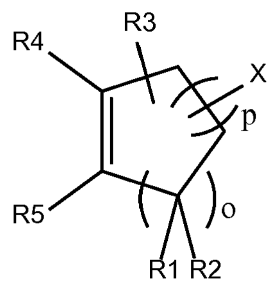

wobei

o eine natürlich Zahl von 0 bis 8 ist und

R1, R2, R3, R4 und R5 unabhängig voneinander für Wasserstoff, einen C1-C22 Alkylrest, einen C6-C14 Arylrest, einen C7-C14 Aralkyl- oder Alkylarylrest, einen C5-C12 Cycloalkylrest oder für eine Estergruppe -COOR6 stehen, wobei R6 für einen C1-C22 Alkylrest, einen C6-C14 Arylrest, einen C7-C14 Aralkyl- oder Alkylarylrest oder einen C5-C12 Cycloalkylrest steht, oder die Reste R1 und R3 gemeinsam eine C1-C3 Alkylenbrücke oder eine Etherbrücke bilden und

p eine natürlich Zahl von 1 bis 6 ist und

X für eine Carboxylgruppe oder OH-Gruppe, einen mit einer Carboxylgruppe oder OH-Gruppe substituierten C1-C22 Alkylrest oder einen mit einer Carboxylgruppe oder OH-Gruppe substituierten C6-C14-Arylrest oder einen -COOAlkOH Rest, wobei AlkOH für einen C2 bis C12 Hydroxyalkyl-Rest steht.

In einer besonders bevorzugten Ausführungsform ist die H-funktionelle Startersubstanz eine oder mehrere Verbindungen sind, die ausgewählt sind aus der Gruppe bestehend aus Norbornencarbonsäure, Norbornencarbonsäurehydroxyethylester, Norbornencarbonsäurehydroxypropylester, Norbornencarbonsäurehydroxybutylester, Hydroxynorbornen, Hydroxymethylnorbornen, Cyclopentencarbonsäure, Cyclooctencarbonsäure, Cyclodecencarbonsäure, Cyclopentenol und Cyclooctenol.

Die typische Struktur der erfindungsgemäßen Polyoxyalkylen-Makromere entspricht der nachfolgenden am Beispiel der Verwendung von Propylenoxid, Kohlendioxid sowie Norbornencarbonsäure als Kettenüberträger/Starter gezeigten Formel:

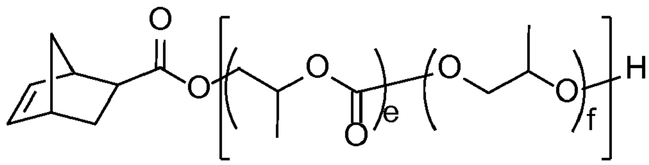

Die vorliegende Erfindung betrifft ebenfalls Polyoxyalkylen-Makromere, erhältlich durch ein erfindungsgemäßes Verfahren.

In der Regel liegt in den durch das erfindungsgemäße Verfahren erhaltenen Polyoxyalkylen-Makromeren einen $CO_2$ Anteil von 3 Gew.-% bis 35 Gew.-% bevorzugt von 5 Gew.-% bis 25 Gew.-% aufweisen.

Das Verhältnis e:f im erhaltenen Polyoxyalkylen-Makromer beträgt in der Regel 1:1 bis 1:100, vorzugsweise 1:2 bis 1:20. Die Summe aus e+f beträgt in der Regel $\geq$ 3 bis $\leq$ 250, vorzugsweise $\geq$ 10 bis $\leq$ 100.

In der Terminologie der vorliegenden Erfindung bezeichnen die mit n nummerierten Segmente die Polyetherwiederholungseinheiten und die mit m nummerierten Segmente die Polycarbonatwiederholungseinheiten. Polyetherwiederholungseinheiten und Polycarbonatwiederholungseinheiten sind bevorzugt statistisch entlang der Polymerkette angeordnet. Es können jedoch auch Gradienten mit einem ansteigenden oder abfallenden Anteil an Polycarbonatwiederholungseinheiten oder Blöcke von Polyetherwiederholungseinheiten und Polycarbonatwiederholungseinheiten entlang der Polymerkette vorliegen.

In einer weiteren Ausführungsform werden eine oder mehrere H-funktionelle Startersubstanz(en) und ein oder mehrere Alkylenoxid(e) während der Reaktion kontinuierlich in den Reaktor zudosiert. Bevorzugt erfolgt die Reaktion in Gegenwart von Kohlendioxid, wobei sich ein $CO_2$-Druck von $\geq$ 1 bar bis $\leq$ 80 bar als vorteilhaft erwiesen hat. Vorzugsweise beträgt der $CO_2$-Druck $\geq$ 5 bar bis $\leq$ 60 bar, besonders bevorzugt $\geq$ 15 bar bis $\leq$ 50 bar und ganz besonders bevorzugt $\geq$ 15 bar bis $\leq$ 45 bar.

Eine weitere Ausführungsform betrifft das Verfahren, wobei

(a) gegebenenfalls eine Teilmenge der H-funktionellen Startersubstanz(en) und/oder ein Suspensionsmittel, das keine H-funktionellen Gruppen enthält, in einem Reaktor jeweils gegebenenfalls gemeinsam mit DMC-Katalysator vorgelegt wird,

($\beta$) gegebenenfalls zu dem Gemisch aus Schritt ($\alpha$) eine Teilmenge an Alkylenoxid bei Temperaturen von 90 bis 150°C zugegeben wird, und wobei dann die Zugabe der Alkylenoxidverbindung unterbrochen wird, und

($\gamma$) eine oder mehrere H-funktionelle Startersubstanz(en) während der Reaktion kontinuierlich in den Reaktor zudosiert werden.

Vorzugsweise wird in Schritt ($\gamma$) zusätzlich DMC-Katalysator kontinuierlich in den Reaktor dosiert und das resultierende Reaktionsgemisch wird kontinuierlich aus dem Reaktor entfernt.

Es ist ferner möglich, dass:

($\delta$) das in Schritt ($\gamma$) kontinuierlich entfernte Reaktionsgemisch mit einem Gehalt von 0,05 Gew.-% bis 10 Gew.-% Alkylenoxid in einen Nachreaktor überführt wird, in dem im Wege einer Nachreaktion der Gehalt an freiem Alkylenoxid auf weniger als 0,05 Gew.-% im Reaktionsgemisch reduziert wird.

In einer weiteren Ausführungsform des erfindungsgemäßen Verfahrens werden mindestens 80 Gew.-%, vorzugsweise 100 Gew.-% (bezogen auf die Gesamtmenge der eingesetzten Alkylenoxide) der Alkylenoxide aus der Gruppe von Verbindungen der folgenden allgemeinen Formeln ausgewählt:

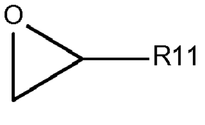

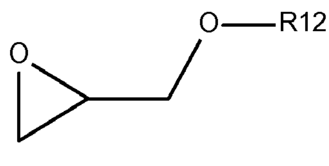

wobei R11 für Wasserstoff, einen $C_1$-$C_{22}$ Alkylrest, der durch Chlor, Brom oder Fluor substituiert sein kann oder einen Vinylrest steht, vorzugsweise für Wasserstoff oder Methyl, und

R12 für einen $C_1$-$C_{22}$-Alkylrest, der auch Etherbrücken enthalten kann, einen $C_3$-$C_{12}$ Alkenylrest, vorzugsweise

einen Allylrest, einen $C_5$-$C_{12}$-Cycloalkylrest, der auch Etherbrücken enthalten kann, einen $C_6$-$C_{14}$ Arylrest, einen Heteroarylrest, vorzugsweise einen Furylrest, oder einen $C_7$-$C_{14}$ Aralkyl oder Alkylarylrest steht.

In einer weiteren Ausführungsform des erfindungsgemäßen Verfahrens umfasst dieses weiterhin den Schritt der Reaktion des erhaltenen Polyoxyalkylen-Makromers mit einem Säureanhydrid oder einem Schutzgruppenreagenz.

Durch Reaktion mit einem Schutzgruppenreagenz kann die OH-Gruppe vor Durchführung der ROMP verkappt werden, wobei als Schutzgruppen-Reagenzien z.B. Bistrimethylsilylacetamid, Bistrimethylsilylharnstoff, Hexamethyldisilazan im Gemisch mit Trichlormethylsilan, Diazomethan, BOC-Anhydrid, Acetanhydrid, Trifluoressigsäureanhydrid, Phenylisocyanat, Methylisocyanat, Ethylisocyanat, Butylisocyanat, Hexylisocyanat oder Cyclohexylisocyanat, und im Gemisch mit äquimolaren Mengen an Basen Tosylchlorid, Mesylchlorid, Trifluormethansulfonsäurechlorid, Chlorameisensäurebenzylester, Chlorameisensäure-o-nitrobenzylester, Benzylchlorid, o-Nitrobenzylchlorid, Benzhydrylchlorid, Tritylchlorid, Diphenylphosphorsäurechlorid, Methyliodid oder Trimethylchlorosilan eingesetzt werden können.

Einige dieser Schutzgruppen lassen sich nach der Durchführung der ROMP wieder entfernen, ohne dass eine Zersetzung des Bürsten-Polymers auftritt. Beispiele sind Schutzgruppen, die durch Hydrierung abspaltbar sind, wie z.B. die Benzyl-, Benzylcarbonat- oder Benzhydrylschutzgruppe oder Schutzgruppen die durch protische Verbindungen, wie Wasser oder Methanol schon im pH-Bereich von 4 bis 8 abgespalten werden können, wie z.B. die Trimethylsilylschutzgruppe.

Ferner kann die OH-Gruppe vor der Durchführung der ROMP mit cyclischen Anhydriden unter Bildung des Halbesters in eine Säuregruppe überführt werden.

Beispiele für cyclische Anhydride sind Bernsteinsäureanhydrid, Hexylbernsteinsäureanhydrid, Octylbernsteinsäureanhydrid, Dodecenylbernsteinsäureanhydrid, Glutarsäureanhydrid, Cyclohexandicarbonsäureanhydrid 4-Methylcyclohexandicarbonsäureanhydrid, Tetrahydrophthsäureanhydrid, 4-Methyl-tetrahydrophthalsäureanhydrid, Phthalsäureanhydrid, Trimellithsäureanhydrid, Tetrachlorphthalsäureanhydrid, Tetrabromphthalsäureanhydrid, Nitrophthalsäureanhydrid, Diphensäureanhydrid.

Bei der exemplarischen Umsetzung eines Polyoxyalkylen-Makromers erhalten durch Umsetzung von Propylenoxid, Kohlendioxid sowie Norbornencarbonsäure als Kettenüberträger/Starter mit Cyclohexandicarbonsäureanhydrid entsteht ein Polyoxyalkylen-Makromer der folgenden Formel:

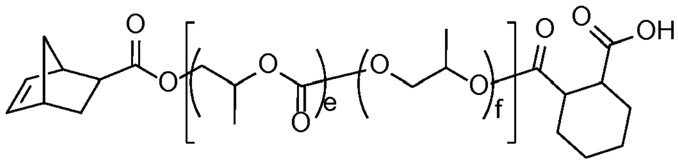

Die vorliegende Erfindung betrifft ebenfalls Polyoxyalkylen-Makromere, erhältlich durch ein erfindungsgemäßes Verfahren.

In der Regel liegt in den durch das erfindungsgemäße Verfahren erhaltenen Polyoxyalkylen-Makromeren einen $CO_2$ Anteil von 3 Gew.-% bis 35 Gew.-% bevorzugt von 5 Gew.-% bis 25 Gew.-% aufweisen, wobei der $CO_2$-Anteil mittels $^1$H-NMR bestimmt worden ist..

In einer bevorzugten Ausführungsform weisen die Polyoxyalkylen-Makromere ein zahlenmittleren Molekulargewicht Mn von ≥ 500 g/mol bis ≤ 1000000 g/mol besonders bevorzugt ≥ 1000 g/mol bis ≤ 200000 g/mol auf, welche mittels GPC bestimmt worden ist.

Vorzugsweise weisen die erfindungsgemäßen Polyoxyalkylen-Makromere eine Glasübergangstemperatur Tg von ≥ -80 °C mol bis ≤ -1 °C besonders ≥ -70 °C mol bis ≤ -5 °C auf, gemessen gemäß DSC-Methode nach ISO 6721-11 bei einer Aufheizrate von 10 K/min.

Ein weiterer Gegenstand der vorliegenden Erfindung ist ein Verfahren zur Herstellung von Polyoxyalkylen-Bürsten-Polymeren, wobei das Verfahren den Schritt der Reaktion eines zuvor erwähnten erfindungsgemäßen Polyoxyalkylen-Makromers mit einem Olefinmetathese-Katalysator umfasst.

Unter Bürsten-Polymeren im Sinne der Erfindung werden Pfropfpolymere verstanden, die durch Polymerisation von monofunktionellen Makromeren oder Copolymerisation von monofunktionellen Makromeren mit Comonomeren zugänglich sind. Es resultiert eine Struktur, bei der Polymerpfröpfe nur an einer Seite an einem Polymerrückgrat befestigt sind. Bürstenpolymere sind typischerweise Pfropfpolymere mit einer hohen Pfropfdichte.

Als Olefinmetathese-Katalysatoren für die Ringöffnende-Olefinmetathese-Reaktion (ROMP) werden vorzugsweis Carbene des Molybdäns oder Wolframs (Schrock-Carbene) oder Carbene des Rutheniums (Grubbs-Katalysatoren) eingesetzt. Geeignete Ruthenium-Carbene werden in Polymer 50(2010) 2947-2946 und der dort zitierten Literatur beschrieben. Vorzugsweise ist der Olefinmetathese-Katalysator ein oder mehrere Ruthenium-Carben-Komplex(e) und ausgewählt werden aus der Gruppe bestehend aus Dichloro[1,3-bis(2,4,6-trimethylphenyl)-2-imidazolidinylidene](benzylidene)bis(3-bromopyridine)ruthenium(II), Dichloro[1,3-bis(2,4,6-trimethylphenyl)-2-imidazolidinylidene](2-isopropoxyphenylmethylene)ruthenium(II), Dichloro(benzylidene)bis(tricyclohexylphosphine)ruthenium(II) und Dichloro[1,3-bis(2-methylphenyl)-2-imidazolidinylidene](2-isopropoxyphenylmethylene)ruthenium(II)..

Es ist weiterhin bevorzugt, dass die Reaktion zusätzlich in Gegenwart eines cyclischen Olefins durchgeführt wird.

Diese cyclischen Olefine können mit in das vernetzte Polymer einpolymerisiert werden und auf diese Weise die einzelnen Polyoxyalkylen-Segmente ermöglichen, einen größeren Abstand voneinander einhalten.

Sie entsprechen der folgenden Formel,

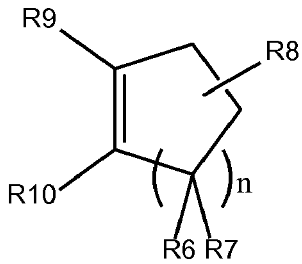

wobei R7, R8, R9, R10 und R11 für Wasserstoff, einen C1-C22 Alkylrest, einen C6-C14 Arylrest, einen C7-C14 Aralkyl- oder Alkylarylrest, einen C5-C12 Cycloalkylrest oder für eine Estergruppe -COOR6 stehen, wobei R6 für einen C1-C22 Alkylrest, einen C6-C14 Arylrest, einen C7-C14 Aralkyl- oder Alkylarylrest oder einen C5-C12 Cycloalkylrest steht, oder die Reste R1 und R3 gemeinsam eine C1-C3 Alkylenbrücke oder eine Etherbrücke bilden.

Beispiele für geeignete, zur ROMP befähigte cyclische Olefine sind Norbornen, Norbornendicarbonatsäuredimethylester, Norbornendicarbonsäurediethylester, Norbornendicarbonsäuredibutylester, Norbornencarbonsäuremethylester, Norbornendicarbonsäureethylester, Norbornencarbonsäurebutylester, Cyclopenten oder Cycloocten.

Das Verhältnis zwischen cyclischem Olefin und Polyoxyalkylen-Makromer p:o kann in weiten Bereichen variiert werden. Das Verhältnis p:o beträgt vorzugsweise $\geq 0$ bis $\leq 10$, die Summe aus p+o vorzugsweise $\geq 10$ bis $\leq 500$.

Es ist weiterhin bevorzugt, dass das erhaltene Polyoxyalkylen-Bürsten-Polymer mit einem Säureanhydrid oder einem Schutzgruppenreagenz zur Reaktion gebracht wird. Als Säureanhydrid oder Schutzgruppenreagenz können die oben genannten Verbindungen zum Einsatz kommen.

Ebenso in die vorliegende Erfindung eingeschlossen sind Polyoxyalkylen-Bürsten-Polymere, die durch das obige Verfahren erhältlich sind. Ein Polyoxyalkylen-Bürsten-Polymer entspricht exemplarisch der nachfolgenden Formel, wenn als Polyoxyalkylen-Makromer ein oben erwähntes Polyoxyalkylen-Makromer und Norbornen als cyclisches Olefin eingesetzt wurde.

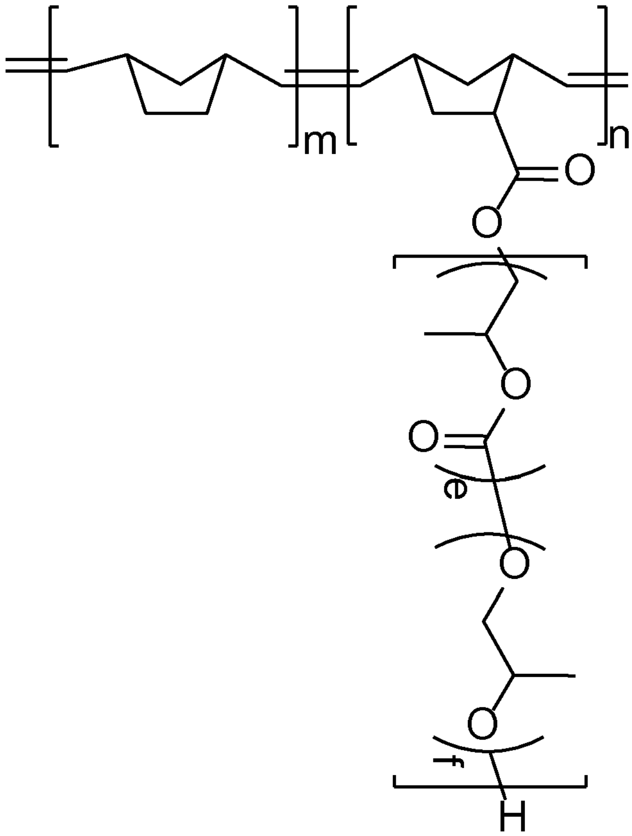

Polyoxyalkylen-Bürsten-Polymere können anschließend mit cyclischen Säureanhydriden unter Bildung des Halbesters zu säurefunktionellen Polyoxyalkylen-Bürsten-Polymeren umgesetzt werden. Das Verhältnis p:o beträgt vorzugsweise 0 bis 10, die Summe aus p+o vorzugsweise 10 bis 500.

Vorzugsweise haben die erfindungsgemäßen Polyoxyalkylen-Bürsten-Polymere eine Glasübergangstemperatur, gemessen gemäß DSC-Methode nach ISO 6721-11 bei einer Aufheizrate von 10 K/min, von ≥ -80 °C mol bis ≤ -1 °C besonders ≥ -70 °C mol bis ≤ -5 °C.

Die erfindungsgemäß erhaltenen Bürsten-Polymere können mit Radikal-Initiatoren, wie Cumylperoxid, t-Butylperoxid oder Trigonox 101 optional in Gegenwart anderer doppelbindungshaltiger Covernetzer, wie Methacrylaten des Ethylenglykols oder Trimethylolpropans, Triallylisocyanurat, Triallylcyanurat oder Bismaleinimiden des MDAs oder TDAs zu Elastomeren vernetzt werden.

Im Falle, dass die Bürsten-Polymere ungeschützte OH-Gruppen aufweisen, können sie durch Di- oder polyfunktionelle Isocyanate, MF- oder UF-Harze vernetzt werden.

Im Falle, dass die Bürsten-Polymere Säuregruppen, die durch Umsetzung der OH-Gruppen mit cyclischen Anhydriden eingeführt wurden, aufweisen, können sie mit Epoxyharzen vernetzt werden.

Daher ist ein weiterer Gegenstand der Erfindung vernetzte Polyoxyalkylen-Polymere, erhältlich durch:

Reaktion von OH-Endgruppen aufweisenden Polyoxyalkylen-Bürsten-Polymeren gemäß der Erfindung mit Polyisocyanaten;
oder

Reaktion von OH-Endgruppen aufweisenden Polyoxyalkylen-Bürsten-Polymeren gemäß der Erfindung mit mit Polycarbonsäuren oder cyclischen Carbonsäureanhydriden;
oder

radikalische Vernetzung von Polyoxyalkylen-Bürsten-Polymeren gemäß der Erfindung.

Vorzugsweise haben die vernetzten Polyoxyalkylen-Polymere eine Glasübergangstemperatur, gemessen gemäß DSC-Methode nach ISO 6721-11 bei einer Aufheizrate von 10 K/min, von ≤ 0 °C.

Die Erfindung wird durch die nachfolgenden Beispiele weiter erläutert, ohne jedoch darauf beschränkt zu sein.

## Beispiele

Einsatzstoffe:

*H-funktionelle Startersubstanzen*

NCA: 5-Norbornen-2-carbonsäure (Sigma-Aldrich, 98%)

*Epoxide*

Propylenoxid (Chemogas NV, 99,9%)

*Comonomer*

Norbornen (Sigma-Aldrich, 99%)

*Suspensionsmittel*

cPC: cyclisches Propylencarbonat (Sigma-Aldrich, 99%)

*Katalysator*

Als DMC-Katalysator wurde bei allen Beispielen DMC-Katalysator hergestellt gemäß Beispiel 6 in WO 01/80994 A1 eingesetzt.

Grubbs' Katalysator: Dichloro[1,3-bis(2,4,6-trimethylphenyl)-2-imidazolidinylidene](benzylidene)bis(3-bromopyridine)ruthenium(II) (Sigma-Aldrich)

Methoden:

Die Polymerisationsreaktionen wurden in einem 300 ml Druckreaktor der Fa. Parr durchgeführt. Der in den Beispielen eingesetzte Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Bei dem in den Beispielen eingesetzten Gaseintragsrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas ($CO_2$ und ggf. Alkylenoxid) abgesaugt wurde und über die Hohlwelle des Rührers in die Reaktionsmischung eingeleitet wurde. Die Bezeichnung rpm bezieht sich auf die Anzahl der Umdrehungen des Rührers pro Minute.

Anschließend wurde die Reaktionsmischung mit Dichlormethan (20 ml) verdünnt und die Lösung durch einen Fallfilmverdampfer geleitet. Die Lösung (0,1 kg in 3 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von 3 mbar eingestellt. Die von leicht flüchtigen Bestandteilen (nicht umgesetzte Epoxide, cyclisches Carbonat, Lösungsmittel)

gereinigte Reaktionsmischung wurde am unteren Ende des beheizten Rohres in einer Vorlage aufgefangen.

a) Bei der Copolymerisation von Propylenoxid und $CO_2$ resultierte neben dem cyclischen Propylencarbonat das Polyethercarbonat-Makromer, welches einerseits in der nachfolgenden Formel gezeigte Polycarbonat-Einheiten enthält,

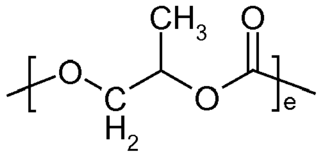

bzw.

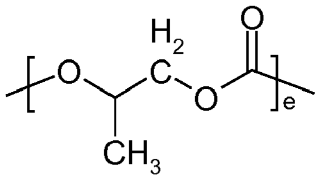

und andererseits in der nachfolgenden Formel gezeigte Polyether-Einheiten enthält.

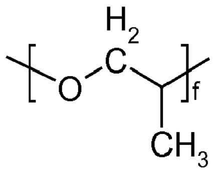

bzw.

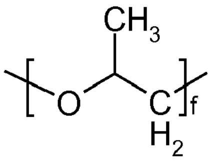

Für $^1$H-NMR Spektren wurde die Probe in deuteriertem Chloroform gelöst und auf einem Spektrometer der Firma Bruker (AV400, 400 MHz) vermessen.

Die relevanten Resonanzen im $^1$H-NMR Spektrum (bezogen auf TMS = 0 ppm), die zur Integration verwendet wurden, sind wie folgt:

I1: 1,10 - 1,17 ppm: $CH_3$ Gruppe der Polyether-Einheiten, Fläche der Resonanz entspricht drei H Atomen,
I2: 1,25 - 1,34 ppm: $CH_3$ Gruppe der Polycarbonat-Einheiten, Fläche der Resonanz entspricht drei H Atomen,
I3: 6,22-6,29 ppm: CH Gruppe der in das Polymer über den Einbau von 5-Norbornen-2-carbonsäure erhaltenen Doppelbindung, Fläche der Resonanz entspricht zwei H Atomen.

Angegeben sind das molare Verhältnis von Carbonatgruppen zu Ethergruppen im Polyethercarbonat-Makromer (e/f), der Anteil an Carbonatgruppen (mol %) in dem Polyethercarbonat-Makromer, den Anteil an Ethergruppen (mol %) in dem Polyethercarbonat-Makromer, der Anteil an NCA (mol %) in dem Polyethercarbonat-Makromer sowie den Anteil an $CO_2$ (Gew.-%) in dem Polyethercarbonat-Makromer.

Molares Verhältnis von Carbonatgruppen zu Ethergruppen im Polyethercarbonat-Makromer (e/f):

$$\mathrm{e/f} = I2/I1$$

Der Anteil an Carbonatgruppen (mol %) im Polyethercarbonat-Makromer:

$$\text{Carbonatgruppen-Einbau (mol \%)} = \left[ \frac{\left(\frac{I2}{3}\right)}{\left(\frac{I1}{3}\right)+\left(\frac{I2}{3}\right)+\left(\frac{I3}{2}\right)} \right] * 100$$

Der Anteil an Ethergruppen (mol %) im Polyethercarbonat-Makromer:

$$\text{Ethergruppen-Einbau (mol \%)} = \left[ \frac{\left(\frac{I1}{3}\right)}{\left(\frac{I1}{3}\right)+\left(\frac{I2}{3}\right)+\left(\frac{I3}{2}\right)} \right] * 100$$

Der Anteil an NCA (mol %) im Polyethercarbonat-Makromer:

$$\text{NCA-Einbau (mol \%)} = \left[\frac{\left(\frac{I3}{2}\right)}{\left(\frac{I1}{3}\right)+\left(\frac{I2}{3}\right)+\left(\frac{I3}{2}\right)}\right] * 100$$

Der Anteil an $CO_2$-Einbau (Gew.-%) im Polyethercarbonat-Makromer:

$$CO_2\text{-Einbau (Gew.-\%)} = \left[\frac{\left(\frac{I2}{3}\right)*44}{\left(\frac{I1}{3}*58\right)+\left(\frac{I2}{3}*102\right)+\left(\frac{I3}{2}*138\right)}\right] * 100$$

*OH-Zahl (Hydroxylzahl)*

Die OH-Zahl (Hydroxylzahl) wurde in Anlehnung an DIN 53240-2 bestimmt, wobei jedoch N-Methylpyrrolidon anstelle von THF/Dichlormethan als Lösemittel verwendet wurde. Es wurde mit 0,5 molarer ethanolischer KOH Lösung titriert und die Endpunktserkennung erfolgte mittels Potentiometrie. Als Prüfsubstanz diente zertifiziertes Rizinusöl. Die Angabe der Einheit in "mg KOH/g" bezieht sich auf mg[KOH]/g[Polyethercarbonat-Makromer].

*Gelpermeationschromatographie*

Das Zahlenmittel $M_n$ und das Gewichtsmittel $M_w$ des Molekulargewichts der erhaltenen Polyethercarbonatpolyole wurde mittels Gelpermeationschromatographie (GPC) bestimmt. Es wurde nach DIN 55672-1: "Gelpermeationschromatographie, Teil 1 - Tetrahydrofuran als Elutionsmittel" vorgegangen (SECurity GPC-System von PSS Polymer Service, Flussrate 1.0 ml/min; Säulen: 2×PSS SDV linear M, 8×300 mm, 5 μm; RID-Detektor). Dabei wurden Polystyrolproben bekannter Molmasse zur Kalibrierung verwendet. Die Polydispersität wurde als das Verhältnis $M_w/M_n$ berechnet.

*Rheologie*

Die Viskosität des Produktgemisches wurde mit einem Rheometer Physica MCR 501 der Firma Anton Paar bei 25°C bestimmt, wobei eine Kugel-Platte-Konfiguration mit einem Kugeldurchmesser von 25 mm mit einem Abstand von 0,05 mm zwischen Kugel und Platte verwendet wurden. Die Scherrate wurde innerhalb von 10 min von 0,01 auf 1000 1/s gesteigert. Alle 10 s wurde ein Wert genommen. Angegeben ist die Viskosität als der Durchschnitt der insgesamt 60 Messwerte.

*Thermische Analyse*

Die Glasübergangstemperatur wurde mit einem Mettler Toledo DSC 1 gemessen. Es wurden zwischen 4 und 10 mg der zu vermessenden Probe mit einer Heizrate von 10 K/min von -80°C auf 40 °C erhitzt. Als Auswertungssoftware wurde STAR$^e$ 25 SW 11.00 verwendet. Zur Ermittlung der Glasübergangstemperatur wurde, sofern nicht anders erwähnt, ein tangentielles Auswertungsverfahren angewendet. Als Glasübergangstemperatur wird der Mittelpunkt zwischen dem Schnittpunkt der mittleren Tangente mit der Tieftemperaturtangente und dem Schnittpunkt der mittleren Tangente mit der Hochtemperaturtangente angegeben.

**Beispiel 1: Herstellung eines Polyethercarbonat-Makromers durch Copolymerisation im semi-batch CAOS Verfahren bei 15 bar $CO_2$**

Schritt α:

In einem 300 ml Druckreaktor ausgestattet mit einem Gaseintragsrührer wurde eine Mischung aus DMC-Katalysator (21,5 mg) und cyclischem Propylencarbonat (30 g) vorgelegt und 30 min bei 110°C in einem partiellen Vakuum (50 mbar) unter Durchleiten von Argon durch die Reaktionsmischung gerührt (800 rpm).

Schritt β:

Die Suspension wurde dann auf 130 °C aufgeheizt und mit 15 bar $CO_2$ beaufschlagt, wobei ein leichter Temperaturabfall zu beobachten war. Nach Wiedererreichen einer Temperatur von 130°C wurden 1,5 g Propylenoxid mit

Hilfe einer HPLC-Pumpe (1 ml/min) zudosiert. Die Reaktionsmischung wurde 20 min bei 130°C gerührt (800 rpm). Die Zugabe von 1,5 g der Monomermischung wurde ein zweites und drittes Mal wiederholt.

Schritt γ:

Die Temperatur wurde auf 110°C nachgeregelt und während der nachfolgenden Schritte der Druck im Druckreaktor durch Nachdosieren von $CO_2$ mit Hilfe eines Massenflußreglers bei 15 bar gehalten. Es wurden unter Rühren weitere 15,5 g einer Propylenoxid über eine HPLC-Pumpe (1 mL/min) zudosiert, wobei die Reaktionsmischung weiterhin gerührt wurde (800 U/min). Drei Minuten nach Beginn der Zugabe von Propylenoxid wurden unter Rühren 2,12 g 5-Norbornen-2-carbonsäure über eine separate HPLC-Pumpe (0,16 mL/min) zudosiert. Nach Ende der Zugabe von Propylenoxid wurde die Reaktionsmischung noch weitere 30 min bei 110°C gerührt. Durch Abkühlen des Druckreaktors im Eisbad wurde die Reaktion beendet und der Überdruck abgelassen.

Die Reaktionsmischung mit Dichlormethan (20 ml) verdünnt, die Lösung durch einen Fallfilmverdampfer geleitet und das resultierende Produkt analysiert. Der Anteil der im erhaltenen Polyethercarbonat-Makromer eingebauten Carbonatgruppen (mol %), Ethergruppen (mol %), NCA-Gruppen (mol %), $CO_2$ (Gew.-%), das Verhältnis von Carbonat- zu Ethereinheiten, das erhaltene Molekulargewicht, der Polydispersionsindex (PDI), die Glasübergangstemperatur ($T_g$) und die Zersetzungstemperatur ($T_D$) sind in Tabelle 1 angegeben.

**Beispiel 2: Herstellung eines Polyethercarbonat-Makromers durch Copolymerisation im semi-batch CAOS Verfahren bei 15 bar $CO_2$**

Schritt α:

In einem 300 ml Druckreaktor ausgestattet mit einem Gaseintragsrührer wurde eine Mischung aus DMC-Katalysator (21,5 mg) und cyclischem Propylencarbonat (30 g) vorgelegt und 30 min bei 110°C in einem partiellen Vakuum (50 mbar) unter Durchleiten von Argon durch die Reaktionsmischung gerührt (800 rpm).

Schritt β:

Die Suspension wurde dann auf 130 °C aufgeheizt und mit 15 bar $CO_2$ beaufschlagt, wobei ein leichter Temperaturabfall zu beobachten war. Nach Wiedererreichen einer Temperatur von 130°C wurden 2,0 g Propylenoxid mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

Schritt γ:

Die Temperatur wurde auf 110°C nachgeregelt und während der nachfolgenden Schritte der Druck im Druckreaktor durch Nachdosieren von $CO_2$ mit Hilfe eines Massenflußreglers bei 15 bar gehalten. Es wurden unter Rühren weitere 41,2 g einer Propylenoxid über eine HPLC-Pumpe (1 mL/min) zudosiert, wobei die Reaktionsmischung weiterhin gerührt wurde (800 U/min). Drei Minuten nach Beginn der Zugabe von Propylenoxid wurden unter Rühren 2,74 g 5-Norbornen-2-carbonsäure über eine separate HPLC-Pumpe (0,08 mL/min) zudosiert. Nach Ende der Zugabe von Propylenoxid wurde die Reaktionsmischung noch weitere 30 min bei 110°C gerührt. Durch Abkühlen des Druckreaktors im Eisbad wurde die Reaktion beendet und der Überdruck abgelassen.

Die Reaktionsmischung mit Dichlormethan (20 ml) verdünnt, die Lösung durch einen Fallfilmverdampfer geleitet und das resultierende Produkt analysiert. Der Anteil der im erhaltenen Polyethercarbonat-Makromer eingebauten Carbonatgruppen (mol %), Ethergruppen (mol %), NCA-Gruppen (mol %), $CO_2$ (Gew.-%), das Verhältnis von Carbonat- zu Ethereinheiten, das erhaltene Molekulargewicht, der Polydispersionsindex (PDI), die Glasübergangstemperatur ($T_g$) und die Zersetzungstemperatur ($T_D$) sind in Tabelle 1 angegeben.

**Vergleichsbeispiel 3: Herstellung eines Polyethercarbonat-Makromers durch Copolymerisation im semi-batch Verfahren bei 15 bar $CO_2$**

Es wurde verfahren, wie im Beispiel 1 beschrieben, wobei 5-Norbornen-2-carbonsäure (2,74 g) in Schritt α vorgelegt wurden. Es wurde kein Polyethercarbonat-Makromer erhalten.

*Vergleich*

Die nachfolgende Tabelle 1 zeigt einen Vergleich der erhaltenen Ergebnisse bei kontinuierlicher Dosierung

des Starters (Continuous Addition of Starter, CAOS, Beispiele 1 bis 3) im Vergleich zu einer Dosierung des Starters im Batch-Modus (Vergleichsbeispiel 4).

**Tabelle 1**

| Beispiel | Dosierung Starter | Carbonatgruppen | Ethergruppen | NCA-Gruppen | $CO_2$-Anteil | e/f | $M_n$ | PDI | $T_g$ | $T_D$ |
|---|---|---|---|---|---|---|---|---|---|---|
| | | [mol%] | [mol%] | [mol%] | [Gew.-%] | [--] | [g/mol] | [--] | [°C] | [°C] |
| 1 | CAOS | 15,6 | 81,9 | 2,6 | 10,4 | 0,19 | 1488 | 1,3 | -60,3 | 320,5 |
| 2 | CAOS | 15,9 | 81,9 | 2,3 | 10,6 | 0,19 | 2693 | 2,9 | -55,6 | 322,8 |
| 3 (Vgl.) | Batch | Keine Polymerbildung | | | | | | | | |
| Vgl.: Vergleichsbeispiel | | | | | | | | | | |

Tabelle 1 zeigt, dass beim Vorlegen des Starters zu Beginn der Reaktion (Vergleichsbeispiel 4) keine Polymerbildung erfolgt. Die Dosierung des Starters im CAOS-Verfahren ist somit essentiell für die Herstellung von Polyethercarbonat-Makromeren bei Verwendung säurefunktioneller Starter.

**Beispiel 4: Herstellung eines Polyethercarbonat-Makromers durch Copolymerisation im semi-batch CAOS Verfahren bei 50 bar $CO_2$**

Schritt $\alpha$:

In einem 300 ml Druckreaktor ausgestattet mit einem Gaseintragsrührer wurde eine Mischung aus DMC-Katalysator (21,5 mg) und cyclischem Propylencarbonat (30 g) vorgelegt und 30 min bei 110°C in einem partiellen Vakuum (50 mbar) unter Durchleiten von Argon durch die Reaktionsmischung gerührt (800 rpm).

Schritt $\beta$:

Die Suspension wurde dann auf 130 °C aufgeheizt und mit 15 bar $CO_2$ beaufschlagt, wobei ein leichter Temperaturabfall zu beobachten war. Nach Wiedererreichen einer Temperatur von 130°C wurden 2,0 g Propylenoxid mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

Schritt $\gamma$:

Die Temperatur wurde auf 110°C nachgeregelt und während der nachfolgenden Schritte der Druck im Druckreaktor durch Nachdosieren von $CO_2$ mit Hilfe eines Massenflußreglers bei 15 bar gehalten. Es wurden unter Rühren weitere 21,0 g einer Propylenoxid über eine HPLC-Pumpe (1 mL/min) zudosiert, wobei die Reaktionsmischung weiterhin gerührt wurde (800 U/min). Drei Minuten nach Beginn der Zugabe von Propylenoxid wurden unter Rühren 2,74 g 5-Norbornen-2-carbonsäure über eine separate HPLC-Pumpe (0,11 mL/min) zudosiert. Nach Ende der Zugabe von Propylenoxid wurde die Reaktionsmischung noch weitere 30 min bei 110°C gerührt. Durch Abkühlen des Druckreaktors im Eisbad wurde die Reaktion beendet und der Überdruck abgelassen.

Die Reaktionsmischung mit Dichlormethan (20 ml) verdünnt, die Lösung durch einen Fallfilmverdampfer geleitet und das resultierende Produkt analysiert. Der Anteil der im erhaltenen Polyethercarbonat-Makromer eingebauten Carbonatgruppen (mol %), Ethergruppen (mol %), NCA-Gruppen (mol %), $CO_2$ (Gew.-%), das Verhältnis von Carbonat- zu Ethereinheiten, das erhaltene Molekulargewicht, der Polydispersionsindex (PDI), die Glasübergangstemperatur ($T_g$) und die Zersetzungstemperatur ($T_D$) sind in Tabelle 2 angegeben.

**Beispiel 5: Herstellung eines Polyethercarbonat-Makromers durch Copolymerisation im semi-batch CAOS Verfahren bei 50 bar $CO_2$**

Schritt $\alpha$:

In einem 300 ml Druckreaktor ausgestattet mit einem Gaseintragsrührer wurde eine Mischung aus DMC-Katalysator (21,5 mg) und cyclischem Propylencarbonat (30 g) vorgelegt und 30 min bei 110°C in einem partiellen Vakuum (50 mbar) unter Durchleiten von Argon durch die Reaktionsmischung gerührt (800 rpm).

Schritt $\beta$:

Die Suspension wurde dann auf 130 °C aufgeheizt und mit 15 bar $CO_2$ beaufschlagt, wobei ein leichter Temperaturabfall zu beobachten war. Nach Wiedererreichen einer Temperatur von 130°C wurden 2,0 g Propylenoxid mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

Schritt $\gamma$:

Die Temperatur wurde auf 110°C nachgeregelt und während der nachfolgenden Schritte der Druck im Druckreaktor durch Nachdosieren von $CO_2$ mit Hilfe eines Massenflußreglers bei 15 bar gehalten. Es wurden unter Rühren weitere 28,2 g einer Propylenoxid über eine HPLC-Pumpe (1 mL/min) zudosiert, wobei die Reaktionsmischung weiterhin gerührt wurde (800 U/min). Drei Minuten nach Beginn der Zugabe von Propylenoxid wurden unter Rühren 2,0 g 5-Norbornen-2-carbonsäure über eine separate HPLC-Pumpe (0,08 mL/min) zudosiert. Nach Ende der Zugabe von Propylenoxid wurde die Reaktionsmischung noch weitere 30 min bei 110°C gerührt. Durch Abkühlen des Druckreaktors im Eisbad wurde die Reaktion beendet und der Überdruck abgelassen.

Die Reaktionsmischung mit Dichlormethan (20 ml) verdünnt, die Lösung durch einen Fallfilmverdampfer geleitet und das resultierende Produkt analysiert. Der Anteil der im erhaltenen Polyethercarbonat-Makromer eingebauten Carbonatgruppen (mol %), Ethergruppen (mol %), NCA-Gruppen (mol %), $CO_2$ (Gew.-%), das Verhältnis von Carbonat- zu Ethereinheiten, das erhaltene Molekulargewicht, der Polydispersionsindex (PDI), die Glasübergangstemperatur ($T_g$) und die Zersetzungstemperatur ($T_D$) sind in Tabelle 2 angegeben.

**Vergleichsbeispiel 6: Herstellung eines Polyethercarbonat-Makromers durch Copolymerisation im semi-batch Verfahren bei 50 bar $CO_2$**

Es wurde verfahren, wie im Beispiel 5 beschrieben, wobei 5-Norbornen-2-carbonsäure (2,74 g) im Schritt $\alpha$ vorgelegt wurden. Es wurde kein Polyoxyalkylenpolyol-Makromer erhalten.

*Vergleich*

Die nachfolgende Tabelle 2 zeigt einen Vergleich der erhaltenen Ergebnisse bei kontinuierlicher Dosierung des Starters (Continuous Addition of Starter, CAOS, Beispiele 5 und 6) im Vergleich zu einer Dosierung des Starters im Batch-Modus (Vergleichsbeispiel 6).

**Tabelle 2**

| Beispiel | Dosierung Starter | Carbonatgruppen | Ethergruppen | NCA Gruppen | $CO_2$-Anteil | e/f | $M_n$ | PDI | $T_g$ | $T_D$ |
|---|---|---|---|---|---|---|---|---|---|---|
| | | [mol%] | [mol%] | [mol%] | [Gew.-%] | [--] | [g/mol] | [--] | [°C] | [°C] |
| 4 | CAOS | 28,2 | 68,5 | 3,3 | 17,3 | 0,41 | 1879 | 2,3 | -45,8 | 309,7 |
| 5 | CAOS | 29,0 | 69,5 | 1,5 | 17,9 | 0,42 | 4072 | 2,1 | -44,2 | 309,7 |
| 6 (Vg 1.) | Batch | Keine Polymerbildung | | | | | | | | |
| Vgl.: Vergleichsbeispiel | | | | | | | | | | |

Tabelle 2 zeigt, dass beim Vorlegen des Starters zu Beginn der Reaktion keine Polymerbildung erfolgt. Die Dosierung des Starters im CAOS-Verfahren ist somit essentiell für die Herstellung von Polyethercarbonat-Makromeren bei Verwendung säurefunktioneller Starter.

Der Vergleich der Ergebnisse aus Tabelle 1 mit den Ergebnissen aus Tabelle 2 zeigt, dass bei höherem $CO_2$ Partialdruck mehr $CO_2$ in das Polyoxyalkylenpolyol-Makromer eingebaut wird.

**Beispiel 7: Herstellung eines Polyethercarbonat-Bürsten-Polymers**

In einem 50 ml Kolben wurde das Polyethercarbonat-Makromer aus Beispiel 1 (404,5 mg, 172,2 µmol, 1,0 eq.) in Dichlormethan (1 mL) gelöst und für 15 min gerührt. Anschließend wurde eine Lösung aus Grubb's Katalysator der dritten Generation (3,8 mg, 4,3 µmol, 2,3 mol%) in Dichlormethan (1 mL) hinzugefügt. Die Reaktionsmischung wurde für 60 min bei Raumtemperatur gerührt. Anschließend wurde die Reaktion durch Zugabe von Ethyl-Vinyl Ether (0,5 mL, 5,3 µmol) beendet. Anschließend wurde das Lösungsmittel bei vermindertem Druck entfernt und das Produkt analysiert. Das erhaltene Molekulargewicht, der Polydispersionsindex (PDI), Glasübergangstemperatur ($T_g$) sind in Tabelle 3 angegeben.

**Beispiel 8: Herstellung eines Polyethercarbonat-Bürsten-Polymers**

In einem 50 ml Kolben wurde das Polyethercarbonat-Makromer aus Beispiel 2 (397,5 mg, 175,3 µmol, 1,0 eq.) in Dichlormethan (1 mL) gelöst und für 15 min gerührt. Anschließend wurde eine Lösung aus Grubb's Katalysator der dritten Generation (3,6 mg, 4,1 µmol, 2,3 mol%) in Dichlormethan (1 mL) überführt. Die Reaktionsmischung wurde für 60 min bei Raumtemperatur gerührt. Anschließend wurde die Reaktion mit der Zugabe von Ethyl-Vinyl Ether (0,5 mL, 5,3 µmol) beendet. Anschließend wurde das Lösungsmittel bei vermindertem Druck entfernt und das Produkt analysiert. Das erhaltene Molekulargewicht, der Polydispersionsindex (PDI), Glasübergangstemperatur ($T_g$) sind in Tabelle 3 angegeben.

**Beispiel 9: Herstellung eines Polyethercarbonat-Bürsten-Polymers**

In einem 50 ml Kolben wurde das Polyethercarbonat-Makromer aus Beispiel 5 (401,1 mg, 213,5 µmol, 1,0 eq.) in Dichlormethan (1 mL) gelöst und für 15 min gerührt. Anschließend wurde eine Lösung aus Grubb's Katalysator der dritten Generation (3,7 mg, 4,2 µmol, 2,3 mol%) in Dichlormethan (1 mL) hinzu gegeben. Die Reaktionsmischung wurde für 60 min bei Raumtemperatur gerührt. Anschließend wurde die Reaktion durch Zugabe von Ethyl-Vinyl Ether (0,5 mL, 5,3 µmol) beendet. Anschließend wurde das Lösungsmittel bei vermindertem Druck entfernt und das Produkt analysiert. Das erhaltene Molekulargewicht, der Polydispersionsindex (PDI), Glasübergangstemperatur ($T_g$) sind in Tabelle 4 angegeben.

**Beispiel 10: Herstellung eines Polyethercarbonat-Bürsten-Polymers**

In einem 50 ml Kolben wurde das Polyethercarbonat-Makromer aus Beispiel 6 (401,2 mg, 98,5 µmol, 1,0 eq.) in Dichlormethan (1 mL) gelöst und für 15 min gerührt. Anschließend wurde eine Lösung aus Grubb's Katalysator der dritten Generation (3.7 mg, 4.2 µmol, 2,3 mol%) in Dichlormethan (1 mL) hinzu gegeben. Die Reaktionsmischung wurde für 60 min bei Raumtemperatur gerührt. Anschließend wurde die Reaktion durch Zugabe von Ethyl-Vinyl Ether (0,5 mL, 5,3 µmol) beendet. Anschließend wurde das Lösungsmittel bei vermindertem Druck entfernt und das Produkt analysiert. Das erhaltene Molekulargewicht, der Polydispersionsindex (PDI), Glasübergangstemperatur ($T_g$) sind in Tabelle 4 angegeben.

**Tabelle 3**

| Beispiel | $M_n$ | PDI | $T_g$ | $T_D$ |
|---|---|---|---|---|
| | [g/mol] | [--] | [°C] | [°C] |
| 7 | 92904 | 1,2 | -59,3 | 317,3 |
| 8 | 99231 | 1,2 | -56,8 | 327,2 |
| 9 | 105500 | 1,2 | -40,4 | 313,1 |
| 10 | 98530 | 1,1 | -42,9 | 311,5 |

Die Ergebnisse aus Tabelle 4 zeigen, dass die Glasübergangstemperatur $T_g$ der Polyethercarbonat-Bürsten-Polymere (Beispiele 7, 8, 9 und 10) im Vergleich zu den entsprechenden Polyethercarbonat-Makromeren (Beispiele 1, 2, 4 und 5) nur unwesentlich erhöht ist, obwohl die Molmasse um mehr als eine Zehnerpotenz erhöht wurde. Dadurch lassen sich die erfindungsgemäßen hochmolekularen Polyethercarbonat-Bürsten-Polymere besonders gut für Kautschuk-Anwendungen einsetzen.

**Beispiel 11: Herstellung eines Polyethercarbonat-Bürsten-Polymers bei einem Verhältnis von Polyethercarbonat-Makromer zu cyclischem Olefin von 95:5**

In einem 50 ml Kolben wurden das Polyethercarbonat-Makromer aus Beispiel 5 (401,2 mg, 213,5 μmol, 1,0 eq.) und Norbornen (20,4 mg, 216,7 μmol, 1,0 eq.) in Dichlormethan (1 mL) gelöst und für 15 min gerührt. Anschließend wurde eine Lösung aus Grubb's Katalysator der dritten Generation (3.8 mg, 4.2 μmol, 2,0 mol%) in Dichlormethan (1 mL) überführt. Die Reaktionsmischung wurde für 60 min bei Raumtemperatur gerührt. Anschließend wurde die Reaktion mit der Zugabe von Ethyl-Vinyl Ether (1 mL, 10,4 μmol) beendet. Anschließend wurde das Lösungsmittel bei vermindertem Druck entfernt und das Produkt analysiert. Das erhaltene Molekulargewicht, der Polydispersionsindex (PDI), Glasübergangstemperatur ($T_g$) sind in Tabelle 5 angegeben.

**Beispiel 12: Herstellung eines Polyethercarbonat-Bürsten-Polymers bei einem Verhältnis von Polyethercarbonat-Makromer zu cyclischem Olefin von 80:20**

In einem 50 ml Kolben wurden das Polyethercarbonat-Makromer aus Beispiel 5 (388,6 mg, 214,5 μmol, 1.0 eq.) und Norbornen (96,9 mg, 1029,2 μmol, 5 eq.) in Dichlormethan (1 mL) gelöst und für 15 min gerührt. Anschließend wurde eine Lösung aus Grubb's Katalysator der dritten Generation (4,2 mg, 4,6 μmol, 2,0 mol%) in Dichlormethan (1 mL) überführt. Die Reaktionsmischung wurde für 60 min bei Raumtemperatur gerührt. Anschließend wurde die Reaktion mit der Zugabe von Ethyl-Vinyl Ether (1 mL, 10,4 μmol) beendet. Anschließend wurde das Lösungsmittel bei vermindertem Druck entfernt und das Produkt analysiert. Das erhaltene Molekulargewicht, der Polydispersionsindex (PDI), Glasübergangstemperatur ($T_g$) sind in Tabelle 5 angegeben.

**Beispiel 13: Herstellung eines Polyethercarbonat-Bürsten-Polymers bei einem Verhältnis von Polyethercarbonat-Makromer zu cyclischem Olefin von 67:33**

In einem 50 ml Kolben wurden das Polyethercarbonat-Makromer aus Beispiel 5 (403,1 mg, 214,5 μmol, 1,0 eq.) und Norbornen (202,0 mg, 2145,5 μmol, 10 eq.) in Dichlormethan (1 mL) gelöst und für 15 min gerührt. Anschließend wurde eine Lösung aus Grubb's Katalysator der dritten Generation (5,5 mg, 6,02 μmol, 2,0 mol%) in Dichlormethan (1 mL) überführt. Die Reaktionsmischung wurde für 60 min bei Raumtemperatur gerührt. Anschließend wurde die Reaktion mit der Zugabe von Ethyl-Vinyl Ether (1 mL, 10,4 μmol) beendet. Anschließend wurde das Lösungsmittel bei vermindertem Druck entfernt und das Produkt analysiert. Das erhaltene Molekulargewicht, der Polydispersionsindex (PDI), Glasübergangstemperatur ($T_g$) sind in Tabelle 5 angegeben.

**Tabelle 4**

| Beispiel | Eingesetzte Monomere | | $M_n$ | PDI | $T_g$ | $T_D$ |
|---|---|---|---|---|---|---|
| | PEC-M [Gew.-%] | Norbornen [Gew.-%] | [g/mol] | [--] | [°C] | [°C] |
| 10 | 100 | 0 | 105500 | 1,2 | -40,4 | 313,1 |
| 11 | 95 | 5 | 91352 | 1,2 | -40,0 | 314,0 |
| 12 | 80 | 20 | 101140 | 1,2 | -37,0 | 311,0 |
| 13 | 67 | 33 | 123070 | 1,2 | -35,0 | 312,0 |
| PEC-M: Polyethercarbonat-Makromer<br>Vgl.: Vergleichsbeispiel | | | | | | |

## Patentansprüche

1. Verfahren zur Herstellung von Polyoxyalkylen-Makromeren, umfassend den Schritt der Reaktion einer oder mehrerer H-funktionellen Startersubstanzen und eines oder mehrerer Alkylenoxide in Gegenwart eines Katalysators,

**dadurch gekennzeichnet, dass**
mindestens eine der H-funktionellen Startersubstanzen eine Kohlenstoff-Kohlenstoff-Doppelbindung umfasst, welche Teil einer cyclischen Struktur ist und
wobei die Startersubstanz und das Alkylenoxid während der Reaktion kontinuierlich in den Reaktor zudosiert werden.

**2.** Verfahren gemäß Anspruch 1, wobei die H-funktionelle Startersubstanz, welche eine Kohlenstoff-Kohlenstoff-Doppelbindung umfasst, durch die nachfolgende allgemeine Formel wiedergegeben wird:

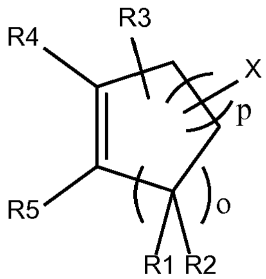

wobei

o eine natürlich Zahl von 0 bis 8 ist und
R1, R2, R3, R4 und R5 unabhängig voneinander für Wasserstoff, einen C1-C22 Alkylrest, einen C6-C14 Arylrest, einen C7-C14 Aralkyl- oder Alkylarylrest, einen C5-C12 Cycloalkylrest oder für eine Estergruppe -COOR6 stehen, wobei R6 für einen C1-C22 Alkylrest, einen C6-C14 Arylrest, einen C7-C14 Aralkyl- oder Alkylarylrest oder einen C5-C12 Cycloalkylrest steht, oder die Reste R1 und R3 gemeinsam eine C1-C3 Alkylenbrücke oder eine Etherbrücke bilden und
p eine natürlich Zahl von 1 bis 6 ist und
X für eine Carboxylgruppe oder OH-Gruppe, einen mit einer Carboxylgruppe oder OH-Gruppe substituierten C1-C22 Alkylrest oder einen mit einer Carboxylgruppe oder OH-Gruppe substituierten C6-C14-Arylrest oder einen -COOAlkOH Rest, wobei AlkOH für einen C2 bis C12 Hydroxyalkyl-Rest steht.

**3.** Verfahren gemäß Anspruch 1 oder 2, wobei die H-funktionelle Startersubstanz eine oder mehrere Verbindungen sind, die ausgewählt sind aus der Gruppe bestehend aus Norbornencarbonsäure, Norbornencarbonsäurehydroxyethylester, Norbornencarbonsäurehydroxypropylester, Norbornencarbonsäurehydroxybutylester, Hydroxynorbornen, Hydroxymethylnorbornen, Cyclopentencarbonsäure, Cyclooctencarbonsäure, Cyclodecencarbonsäure, Cyclopentenol und Cyclooctenol.

**4.** Verfahren gemäß einem der Ansprüche 1 bis 3, wobei eine oder mehrere H-funktionelle Startersubstanz und ein oder mehrere Alkylenoxid(e) die Reaktion in Gegenwart eines Doppelmetallcyanid (DMC)-Katalysators und von Kohlendioxid erfolgt.

**5.** Verfahren gemäß Anspruch 4, wobei

(a) gegebenenfalls eine Teilmenge der H-funktionellen Startersubstanzund/oder ein Suspensionsmittel, das keine H-funktionellen Gruppen enthält, in einem Reaktor jeweils gegebenenfalls gemeinsam mit DMC-Katalysator vorgelegt wird,
(β) gegebenenfalls zu dem Gemisch aus Schritt (a) eine Teilmenge an Alkylenoxid bei Temperaturen von 90 bis 150°C zugegeben wird, und wobei dann die Zugabe der Alkylenoxidverbindung unterbrochen wird, und
(γ) eine oder mehrere H-funktionelle Startersubstanz(en) während der Reaktion kontinuierlich in den Reaktor zudosiert werden.

**6.** Verfahren gemäß einem der Ansprüche 1 bis 5, wobei das Alkylenoxid eine oder mehrere Verbindung(en) sind, die ausgewählt werden aus der Gruppe bestehend aus Propylenoxid, Ethylenoxid, 1-Butylenoxid, 1-Hexenoxid, 1-Dodecenoxid, Epichlorhydrin, Methylglycidylether, Ethylglycidylether, Butylglycidylether, Dodecylglycidylether, Tetradecylglycidylether, Methoxyethylglycidylether oder Methoxyethoxyethylglycidylether, Allylglycidylether, Phenylglycidylether, Kresylglycidylether, Furfurylglycidylether, Benzylglycidylether und Tetrahydrofurfurylglycidylether.

**7.** Polyoxyalkylen-Makromere, erhältlich durch ein Verfahren gemäß einem der Ansprüche 1 bis 6.

**8.** Polyoxyalkylen-Makromere gemäß Anspruch 7, wobei das Polyoxyalkylen-Makromer einen $CO_2$ Anteil von 3 Gew.-% bis 35 Gew.-% bevorzugt von 5 Gew.-% bis 25 Gew.-% aufweist, wobei der $CO_2$-Anteil mittels $^1$H-NMR bestimmt worden ist.

**9.** Polyoxyalkylen-Makromere gemäß Anspruch 7 oder 8, wobei das Polyoxyalkylen-Makromer wobei ein zahlenmittleren Molekulargewicht $M_n$ von ≥ 500 g/mol bis ≤ 1000000 g/mol besonders bevorzugt ≥ 1000 g/mol bis ≤ 200000 g/mol aufweist, welche mittels GPC bestimmt worden ist.

**10.** Polyoxyalkylen-Makromere gemäß einem der Ansprüche 7 bis 9, wobei das Polyoxyalkylen-Makromer ein Glasübergangstemperatur $T_g$ von ≥ -80 °C mol bis ≤ -1 °C besonders ≥ -70 °C mol bis ≤ -5 °C aufweist.

**11.** Verfahren zur Herstellung von Polyoxyalkylen-Bürsten-Polymeren, wobei das Verfahren den Schritt der Reaktion eines Polyoxyalkylen-Makromers gemäß einem der Ansprüche 7 bis 9 mit einem Olefinmetathese-Katalysator umfasst.

**12.** Verfahren gemäß Anspruch 11, wobei die Reaktion zusätzlich in Gegenwart eines cyclischen Olefins durchgeführt wird.

**13.** Verfahren gemäß Anspruch 11 oder 12, wobei der eingesetzte Olefinmetathese-Katalysator ein oder mehrere Ruthenium-Carben-Komplex(e) sind und ausgewählt werden aus der Gruppe bestehend aus Dichloro[1,3-bis(2,4,6-trimethylphenyl)-2-imidazolidinylidene](benzylidene)bis(3-bromopyridine)ruthenium(II), Dichloro [1,3 -bis(2,4,6-trimethylphenyl)-2-imidazolidinylidene] (2-isopropoxyphenylmethylene)ruthenium(II),Dichloro(benzylidene)bis(tricyclohexylphosphine)ruthe nium(II) und Dichloro [1,3 -bis(2-methylphenyl)-2-imidazolidinylidene] (2-isopropoxyphenylmethylene)ruthenium(II).

**14.** Polyoxyalkylen-Bürsten-Polymere, erhältlich durch ein Verfahren gemäß einem der Ansprüche 11 bis 13.

**15.** Vernetzte Polyoxyalkylen-Polymere, erhältlich durch:

Reaktion von OH-Endgruppen aufweisenden Polyoxyalkylen-Bürsten-Polymeren gemäß Anspruch 14 mit Polyisocyanaten;
oder
Reaktion von OH-Endgruppen aufweisenden Polyoxyalkylen-Bürsten-Polymeren gemäß Anspruch 14 mit Polycarbonsäuren oder cyclischen Carbonsäureanhydriden;
oder
radikalische Vernetzung von Polyoxyalkylen-Bürsten-Polymeren gemäß Anspruch 14.

Europäisches Patentamt
European Patent Office
Office européen des brevets

# EUROPÄISCHER RECHERCHENBERICHT

Nummer der Anmeldung
EP 17 20 3362

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 703 426 A1 (BAYER MATERIALSCIENCE AG [DE]) 5. März 2014 (2014-03-05)<br>* Absätze [0001], [0006]; Anspruch 1; Beispiele 1-4 *<br>----- | 1-15 | INV.<br>C08G64/02<br>C08G64/34<br>C08G65/26 |
| A | JEUNG GON KIM ET AL: "Synthesis and Polymerization of Norbornenyl-Terminated Multiblock Poly(cyclohexene carbonate)s: A Consecutive Ring-Opening Polymerization Route to Multisegmented Graft Polycarbonates",<br>MACROMOLECULES,<br>Bd. 45, Nr. 19,<br>9. Oktober 2012 (2012-10-09), Seiten 7878-7883, XP055222331,<br>US<br>ISSN: 0024-9297, DOI: 10.1021/ma301137q<br>* das ganze Dokument *<br>----- | 1-15 | |
| | | | RECHERCHIERTE SACHGEBIETE (IPC) |
| | | | C08G |

Der vorliegende Recherchenbericht wurde für alle Patentansprüche erstellt

1

| Recherchenort | Abschlußdatum der Recherche | Prüfer |
|---|---|---|
| Den Haag | 23. April 2018 | Bezard, Stéphane |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 17 20 3362

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-04-2018

| Im Recherchenbericht angeführtes Patentdokument | Datum der Veröffentlichung | Mitglied(er) der Patentfamilie | Datum der Veröffentlichung |
|---|---|---|---|
| EP 2703426 A1 | 05-03-2014 | BR 112015003837 A2 | 04-07-2017 |
| | | CA 2882915 A1 | 06-03-2014 |
| | | CN 104755531 A | 01-07-2015 |
| | | EP 2703426 A1 | 05-03-2014 |
| | | EP 2888309 A1 | 01-07-2015 |
| | | ES 2602908 T3 | 22-02-2017 |
| | | JP 2015526576 A | 10-09-2015 |
| | | KR 20150052018 A | 13-05-2015 |
| | | PL 2888309 T3 | 31-01-2017 |
| | | RU 2015110827 A | 20-10-2016 |
| | | SG 11201500913Q A | 29-04-2015 |
| | | US 2015259475 A1 | 17-09-2015 |
| | | WO 2014033071 A1 | 06-03-2014 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5109075 A
- JP 02022354 A
- WO 2015032717 A1
- US 3404109 A
- US 3829505 A
- US 3941849 A
- US 5158922 A
- US 5470813 A
- EP 700949 A
- EP 743093 A
- EP 761708 A
- WO 9740086 A1
- WO 9816310 A1
- WO 0047649 A1
- JP 4145123 B
- WO 9740086 A
- WO 0139883 A
- WO 0180994 A
- WO 0180994 A1

### In der Beschreibung aufgeführte Nicht-Patentliteratur

- **INOUE et al.** Copolymerization of Carbon Dioxide and Epoxide with Organometallic Compounds. *Die Makromolekulare Chemie,* 1969, vol. 130, 210-220
- **G.W. COATES.** *Macromol.,* 2012, vol. 45, 7878-7883
- *Chemical Communications,* 2011, vol. 47, 141-163
- *Polymer,* 2010, vol. 50, 2947-2946